# EUROPÄISCHE PATENTSCHRIFT

(11) **EP 4 382 317 B1**
(45) Veröffentlichungstag und Bekanntmachung des Hinweises auf die Patenterteilung: **25.02.2026**
(21) Anmeldenummer: 23210921.5
(22) Anmeldetag: 20.11.2023
(51) Int. Cl.: B60C 11/03, B60C 11/04, B60C 11/13

(54) **LAUFSTREIFEN FÜR EINEN FAHRZEUGREIFEN**
TREAD FOR A VEHICLE TYRE
BANDE DE ROULEMENT POUR UN PNEU DE VÉHICULE

(30) Priorität: 08.12.2022 DE 102022213309
(43) Veröffentlichungstag der Anmeldung: 12.06.2024
(73) Patentinhaber: Continental Reifen Deutschland GmbH, 30175 Hannover (DE)
(72) Erfinder: Gastrich, Holger, 30165 Hannover (DE)
(74) Vertreter: Continental Corporation

(56) Entgegenhaltungen:
- EP-A1- 2 985 157
- EP-A1- 3 501 852
- EP-A1- 3 513 993
- US-A1- 2017 028 790

## Beschreibung

Die Erfindung betrifft einen Laufstreifen für einen Fahrzeugreifen, umfassend eine Profilrille mit zwei Rillenflanken und einem sich zwischen den Rillenflanken erstreckenden Rillengrund, wobei der Rillengrund gegenüber einer Basisfläche um eine Rillentiefe zurückversetzt ist, wobei der Rillengrund entlang einer Längserstreckung der Profilrille mit die Rillentiefe verringernden Erhebungen moduliert ist, wobei die Erhebungen entlang der Längserstreckung jeweils asymmetrisch ausgebildet sind.

Üblicherweise haben Profilrillen einen ebenen Rillengrund. Beispielsweise variiert die Profiltiefe entlang der Längserstreckung einer Umfangsrille in der Regel nicht. Dabei gibt es eine Reihe an sich bekannter Probleme mit solchermaßen konventionell gestalteten Profilrillen. Beispielsweise kann sich die radiale Steifigkeit eines Laufstreifens im Umfeld von Profilrillen verringern, wodurch der Rollwiderstand des Fahrzeugreifens anwachsen kann. Insbesondere kann sich zudem im Zusammenspiel mit anderen Profilelementen eine ungleichmäßige Steifigkeit ergeben, die wiederum zu unregelmäßigem Abrieb führen kann. Weiterhin sind Umfangsrillen mit ebenem Rillengrund für die Haftung eines Reifens auf verschneiter Fahrbahn schlecht geeignet.

Erhebungen am Rillengrund werden gemäß dem Stand der Technik in verschiedenen Ausführungen und zu unterschiedlichen Zwecken vorgeschlagen. Beispielweise werden punktuell Versteifungsrippen und Steinauswerfer am Rillengrund angeordnet. Weiterhin schlägt KR1302548B1 zur Verbesserung der Nasseigenschaften eines Fahrzeugreifens eine wellenförmig modulierte Rillentiefe vor. Bei alledem fehlen jedoch weiterhin Ansätze, die alle eingangs genannten Probleme, insbesondere auch betreffend den Schneegriff, in effizienter und überzeugender Weise zu lösen im Stande sind. EP 3 501 852 A1 beschreibt einen Reifen mit einer Umfangsrille, wobei ein Rillenboden mit einem Rillengrundvorsprung versehen ist, wobei der Rillengrundvorsprung eine erste und eine zweite geneigte Oberfläche umfasst, wobei eine Länge in Umfangsrichtung der ersten geneigten Oberfläche größer ist als eine Länge in Umfangsrichtung der zweiten geneigten Oberfläche. EP 2 985 157 A1 beschreibt einen Flugzeugreifen, wobei eine Umfangsrille eine Wellenform mit in Radialrichtung gerichteter Amplitude aufweist, wobei die Wellenform eine Sägezahnform haben kann, wobei die Sägezahnform in Umfangsrichtung eine lange und einer kurzen Seite haben kann.

Der Erfindung liegt die Aufgabe zugrunde, einen Laufstreifen mit Profilrillen, insbesondere mit Umfangsrillen für effiziente Entwässerung zu schaffen, wobei der Laufstreifen einem Fahrzeugreifen gleichzeitig verbesserte Stabilität und Wintereigenschaften verleihen soll.

Die gestellte Aufgabe wird erfindungsgemäß dadurch gelöst, dass Pocket-Lamellen in dem Laufstreifen ausgebildet sind, wobei die Pocket-Lamellen näher an einem jeweiligen Hochpunkt der Erhebungen angeordnet sind als an einem Punkt voller Profiltiefe.

Die Erfindung erkennt, dass solchermaßen ausgebildete Erhebungen an einem Rillengrund gleichermaßen als Schneeschaufel wirken können, wobei eine Seite der Erhebung zum Aufsammeln von Schnee und die andere Seite zum Stabilisieren der Erhebung und der Profilrille optimiert ist. Durch das Aufsammeln von Schnee in einer Profilrille kann ein vorteilhafter Schnee-Schnee-Griff erzeugt werden. Diese Lösung ist insbesondere für laufrichtungsgebundene Profile sinnvoll.

Sofern die Richtungsbezeichnungen axial, in Axialrichtung, radial, in Radialrichtung und in Umfangsrichtung verwendet werden, beziehen sich diese auf den bestimmungsgemäß an einem Fahrzeug angebrachten Fahrzeugreifen und seine daran vollzogene Rollbewegung. Hierin bezieht sich die Radialrichtung auf eine zur Rotationsachse des Fahrzeugreifens senkrechte und die Rotationsachse schneidende Richtung. **In** Radialrichtung nach innen bezieht sich auf die Orientierung, die in Radialrichtung der Rotationsachse zugewandt ist. **In** Radialrichtung nach außen bezieht sich auf die Orientierung, die in Radialrichtung von der Rotationsachse abgewandt ist. Die Umfangsrichtung bezeichnet die Richtung einer Rollbewegung um die Rotationsachse. Eine in Umfangsrichtung vordere Position am Fahrzeugreifen durchläuft bei Vorwärtsfahrt des Fahrzeugs während einer 360° Umdrehung des Fahrzeugreifens früher einen minimalen Abstand zum Fahrbahnuntergrund als eine in Umfangsrichtung hintere Position, wobei die in Umfangsrichtung hinteren Position weniger als 180° hinter der vorderen Position ihren minimalen Abstand zum Fahrbahnuntergrund durchläuft.

Die Axialrichtung bezieht sich auf eine Richtung parallel zur Drehachse. Axial nach innen zeigend bezieht sich dabei auf eine Orientierung, die einer Reifenäquatorebene bzw. einer Reifenäquatorlinie axial zugewandt ist. Die Reifenäquatorebene ist eine zur Rotationsachse des Fahrzeugreifens senkrechte Ebene, die durch die Mitte der axialen Breite des Fahrzeugreifens verläuft, wobei die Reifenäquatorlinie in der Reifenäquatorebene und auf der Oberfläche des Fahrzeugreifens verläuft. Als Querrichtung wird eine Richtung bezeichnet, die aus Komponenten der Radialrichtung und/oder der Axialrichtung besteht.

Insbesondere können die Umfangsrichtung und die Querrichtung auf einer Basisfläche des Fahrzeugreifens verlaufen. Die Basisfläche fällt zusammen mit jener glatten Oberfläche, welche der Fahrzeugreifen aufweisen würde, wenn keinerlei kleinskalige Profilelemente, wie etwa Rillen oder Schneekanten vorgesehen wären. Kleinskalige Profilelemente sind wenigstens in einer der drei Dimensionen Radialrichtung, Axialrichtung und Umfangsrichtung durch eine Abmessung und/oder durch einen Krümmungsradius gekennzeichnet, der kleiner oder gleich einer maximalen Profiltiefe in dem Fahrzeugreifen ist. Die Basisfläche bleibt konkret überall dort physisch erhalten, wo keine solchen Profilelemente vorgesehen sind. Die erhaltenen Abschnitte der Basisfläche können wenigstens teilweise für einen Kontakt mit einem Fahrbahnuntergrund bestimmt sein. Dort, wo beispielweise eine Rille durch einen Laufstreifen des Fahrzeugreifens verläuft, verläuft die Basisfläche als imaginäre Fläche oberhalb der Rille weiter; dort wo beispielsweise eine radial hervorstehende Rippe auf dem Laufstreifen angeordnet ist, verläuft die Basisfläche als imaginäre Fläche unter der radial hervorstehenden Rippe weiter.

Eine Erhebung am Rillengrund verringert die Profiltiefe insofern, als die Erhebung senkrecht zu der Basisfläche ansteigt und der auf einer Erhebung verlaufende Rillengrund somit weniger weit gegenüber der Basisfläche zurückversetzt ist als abseits der Erhebung, also in einer Position voller Profiltiefe.

Eine Erhebung ist entlang der Längserstreckung der Profilrille asymmetrisch ausgebildet, wenn keine imaginäre Spiegelebene konstruierbar ist, welche die Erhebung auf sich selbst zurück spiegeln würde und senkrecht zu der Basisfläche sowie in Richtung einer Breitenerstreckung der Profilrille verläuft.

Die Erfindung kann mit vorteilhaften Merkmalen weitergebildet werden, wie nachstehend beschrieben.

Die Profilrille ist vorzugsweise eine Umfangsrille. Auf diese Weise kann die zum Aufsammeln von Schnee optimierte Flanke einer Erhebungen in Umfangsrichtung vorne in den Schnee greifen, während die gegenüberliegende Flanke der Erhebung dabei entstehende Kräfte aufnehmen und in den Laufstreifen ableiten kann.

Es können zwischen 10 und 100 Erhebungen je Meter Längserstreckung der Profilrille ausgebildet sein. Bei gleichmäßiger Verteilung ergeben sich hierbei sowohl eine gute Frequenz von Zwischenräumen zur Aufnahme von Schnee als auch eine hohe Stabilität, ohne die wasserableitende Funktion der Profilrille zu sehr zu stören. Die Erhebungen können entlang der Längserstreckung der Profilrille jeweils zwischen 5 mm und 40 mm lang sein. Als Länge ist hierbei die Erstreckung einer Erhebung zwischen zwei Punkten mit voller Profiltiefe definiert.

Benachbarte Erhebungen können direkt aneinander angrenzen, also von einem Punkt mit voller Profiltiefe ausgehend zu beiden Orientierungen der Längserstreckung direkt ansteigen. Alternativ kann zwischen zwei Erhebungen ein ebener Abschnitt angeordnet sein, in dem der Rillengrund eben und bei voller Profiltiefe verläuft. Zusätzlich zu den asymmetrischen Erhebungen können weitere Erhebungen am Rillengrund ausgebildet sein, die symmetrisch ausgebildet sein können. Beispielsweise können abwechselnd asymmetrische und symmetrische Erhebungen am Rillengrund ausgebildet sein.

Die Erhebungen erstrecken sich senkrecht zu der Basisfläche jeweils über 20% bis 80% der vollen Profiltiefe, vorzugsweise über 40% bis 60%. Hierdurch wird ein gutes Gleichgewicht zwischen der entwässernden Funktion der Profilrille auf der einen Seite und der Stabilisierung und Schneesammelfunktion auf der anderen Seite gefunden.

Die Erhebungen erstrecken sich vorzugsweise jeweils über eine volle Breite der Profilrille zwischen den Rillenflanken und gehen in die Rillenflanken über. Auf diese Weise wird die stabilisierende Funktion der Erhebungen besonders effektiv gewährleistet. Der Rillengrund kann am höchsten Punkt der Erhebungen jeweils entlang einer Breitenerstreckung der Profilrille eine konstante Rillentiefe aufweisen. Ein Radius der Verrundung zu den Rillenflanken kann am höchsten Punkt der Erhebungen kleiner gewählt werden als an Positionen mit voller Profiltiefe. Hierdurch wird die stabilisierende Funktion der Erhebungen noch weiter gefördert.

Die asymmetrische Form der Erhebungen kann wie folgt vorteilhaft ausgestaltet werden: Eine maximale Höhe einer Erhebung kann bei zwischen 20% und 45%, vorzugsweise bei zwischen 25% bis 35% der Länge der Erhebung erreicht werden. Bei einer symmetrischen Erhebung läge dieser Wert bei 50%. Durch die Verschiebung des Hochpunktes aus der Mitte der Erhebung kann die Eignung zum Aufsammeln von Schnee optimiert werden. Vorzugsweise ist die steilere Flanke der Erhebung dabei in Umfangsrichtung vorn angeordnet, sodass der Weg vom Eintritt der Erhebung in den Schnee zum höchsten Punkt der Erhebung kürzer ist als der Weg vom höchsten Punkt zum Austritt der Erhebung aus dem Schnee. Die gegenüberliegende seichtere Flanke nimmt die beim Aufsammeln von Schnee an der steileren Flanke einwirkenden Kräfte dabei besonders gut auf, ohne dass es zu starken Verformungen im Laufstreifen kommt.

Eine Erhebung kann entlang der Längserstreckung jeweils unter einem maximalen Anstiegswinkel ansteigen und unter einem maximalen Abfallwinkel abfallen, wobei der maximale Anstiegswinkel sich von dem maximalen Abfallwinkel unterscheidet, und insbesondere (im Absolutbetrag) größer ist. Die maximalen Winkel markieren Punkte maximaler (absoluter) Steigung entlang einer geschwungenen Kontur der Erhebung, an denen die zweite Ableitung der Kontur bei ausreichender Differenzierbarkeit das Vorzeichen wechseln würde. Der Anstiegswinkel ist vorzugsweise an der in Umfangsrichtung vorderen Seite einer Erhebung definiert und der Abfallwinkel an der in Umfangsrichtung hinteren Seite. Der maximale Anstiegswinkel kann zwischen 50° und 80° und der maximale Abfallwinkel zwischen 30° und 60° betragen. Die Winkel sind gegenüber der Richtung der Längserstreckung der Profilrille definiert. Die Differenz aus maximalem Anstiegs- und Abfallwinkel kann zwischen 5° und 50°, vorzugsweise zwischen 10° und 30° liegen. Die Kontur der Erhebungen, wobei die Kontur in einer Ebene senkrecht zu der Basisfläche und in Richtung der Längsrichtung definiert ist, kann stetig, vorzugsweise stetig differenzierbar und weiter vorzugsweise zweimal stetig differenzierbar sein.

Vorzugsweise umfasst der Laufstreifen mehrere Profilrillen mit erfindungsgemäßen Erhebungen am Rillengrund. Beispielsweise können mehrere parallel verlaufende Umfangsrillen mit im Wesentlichen identischer Modulation des Rillengrundes in dem Laufstreifen ausgebildet sein. Die Erhebungen parallel verlaufender Rillen können an gleichen Stellen entlang der Längserstreckung angeordnet sein oder mit einem Versatz. Beispielsweise können die Erhebungen in zwei benachbarten Umfangsrillen mit der gleichen Wellenlänge, jedoch phasenverschoben angeordnet werden, wodurch eine gleichmäßige Stabilisierung des Laufstreifens erreicht werden kann.

Es kann vorteilhaft sein, weitere Profilrillen in eine erfindungsgemäß modulierte Profilrille münden zu lassen. Hierbei erfolgt eine Mündung vorzugsweise zwischen zwei Erhebungen, an einer Längsposition mit voller Profiltiefe, sodass eine optimale Entwässerung gewährleistet ist.

Erfindungsgemäß sind zusätzlich sogenannte Pocket-Lamellen in dem Laufstreifen ausgebildet. Pocket-Lamellen haben lateral keine offenen Enden, sind also nur zur Basisfläche hin, nicht aber beispielsweise zu Rillenflanken hin geöffnet. Solche Pocket-Lamellen sind in einem Profilblock oder einer Profilrippe näher an einem Hochpunkt einer erfindungsgemäßen Erhebung angeordnet sein als an einem Punkt voller Profiltiefe. Auf diese Weise kann eine bei der Pocket-Lamelle verringerte Steifigkeit im Laufstreifen von der Erhebung kompensiert werden, wobei die bei einem Punkt voller Profiltiefe ebenfalls verringerte Steifigkeit ihrerseits von einem direkt benachbarten Profilblock oder Rippenabschnitt ohne Lamelle kompensiert werden kann. Somit wird eine gleichmäßige Steifigkeit und daraus folgend ein gleichmäßiger Reifenabrieb gefördert.

Die Erfindung betrifft außerdem einen Fahrzeugreifen mit vor- und /oder nachstehend beschriebenem Laufstreifen. Der Fahrzeugreifen wird vorzugsweise im Lichte der vor- und/oder nachstehenden Beschreibung laufrichtungsgebunden eingesetzt. Gemäß der Erfindung ausgeführte Fahrzeugreifen sind Reifen beliebiger Bauart, insbesondere Radialreifen, und Reifen beliebigen Typs, insbesondere Fahrzeugluftreifen für Kraftfahrzeuge, wie Personenkraftwagen, Light-Trucks oder Nutzfahrzeuge.

Die Erfindung wird nachfolgend unter Bezugnahme auf die beigefügten Zeichnungen anhand vorteilhafter Ausführungsformen beispielhaft beschrieben. Es zeigen:
Figur 1 schematisch eine Schnittansicht einer Ausführungsform eines erfindungsgemäßen Laufstreifens,
Figur 2 schematisch eine Draufsicht auf eine Ausführungsform eines erfindungsgemäßen Laufstreifens,
Figur 3 schematisch eine Schnittansicht gemäß der in Figur 2 eingezeichneten Schnittlinie,
Figur 4 schematisch eine ähnliche Ansicht wie in Figur 3 einer alternativen Ausführungsform.

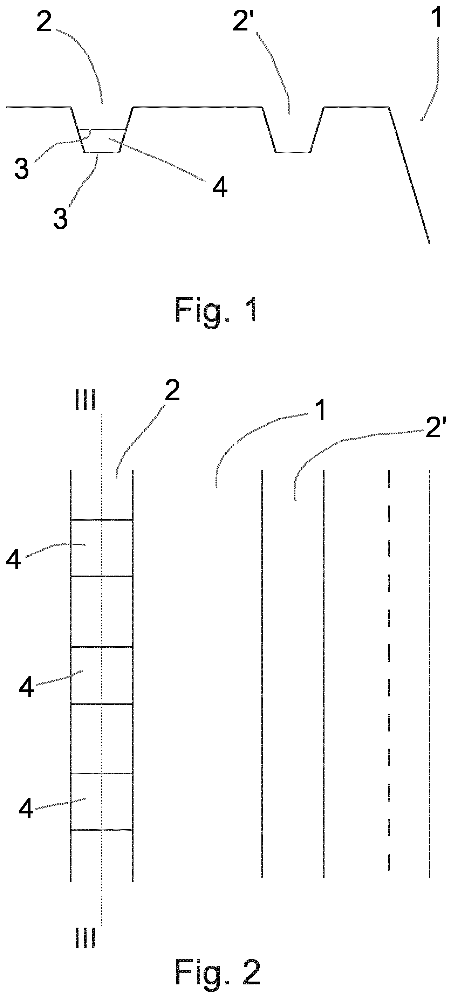

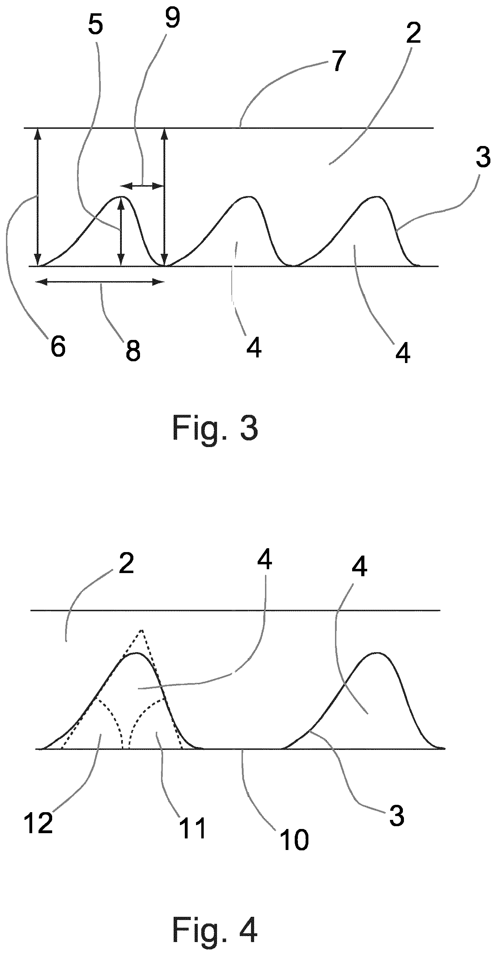

Figur 1 zeigt einen radial und axial äußeren Abschnitt eines Schnitts durch eine Ausführungsform eines erfindungsgemäßen Laufstreifens 1. Die Schnittebene steht senkrecht auf der Umfangsrichtung. Es sind zwei parallel verlaufende Umfangsrillen 2, 2' in dem Laufstreifen 1 ausgebildet. Die axial innere Umfangsrille 2 ist am Rillengrund 3 mit erfindungsgemäßen Erhebungen 4 moduliert. Der gezeigte Schnitt verläuft bei einer, an der Umfangsrichtung gemessen, maximalen Höhe 5 (vgl. Figur 3) einer solchen Erhebung 4 bzw. bei einem entsprechenden Minimum der Rillentiefe. **In** der gezeigten Umfangsposition erstreckt sich die Erhebung 4 bei konstanten 50% der vollen Profiltiefe 6 (vgl. Figur 3) in Axialrichtung über die gesamte Breite der Profilrille 2.

Figur 2 zeigt eine Draufsicht einer Ausführungsform eines erfindungsgemäßen Laufstreifens 1. Hierbei kann es sich um die in Figur 1 gezeigte Ausführungsform handeln. **In** dem gezeigten Umfangsabschnitt der radial inneren Profilrille 2 sind entlang der Längserstreckung der Profilrille 2 drei erfindungsgemäße Erhebungen 4 ausgebildet. Die begrenzenden, in der Zeichnung waagerechten Striche markieren Umfangspositionen, an denen die Erhebungen 4 eine Höhe von 50% ihrer maximalen Höhe 5 erreichen.

Der Höhenverlauf der Erhebungen 4 bzw. die entsprechende Modulation des Rillengrundes 3 wird in Figur 3 noch deutlicher. Hier ist eine Schnittansicht gemäß der in Figur 2 eingezeichneten Schnittlinie **III-III** abgebildet. Zwei in der Zeichnung waagerechte Linien markieren die radialen Positionen der vollen Profiltiefe 6 und der Basisfläche 7 des Laufstreifens 1. Es ist anzumerken, dass Krümmungen, die der Laufstreifen 1 in seiner bestimmungsgemäßen Form an einem Fahrzeugreifen annehmen würde, in den Figuren der besseren Übersicht halber nicht nachvollzogen sind; anstelle einer waagerechten Geraden in Figur 3 würde die Basisfläche 7 an einem Fahrzeugreifen beispielsweise einer Krümmung in Umfangsrichtung folgen. Die Erhebungen 4 erstrecken sich in ihrer maximalen Höhe 5 über etwa 50% der vollen Profiltiefe 6. Die maximale Höhe 5 wird in Richtung der Längserstreckung der Profilrille 2 bei etwa 30% der Länge 8 der Erhebung 4 erreicht, also mit einer entsprechenden Verschiebung 9 gegenüber einem benachbarten Punkt voller Profiltiefe. Vorzugsweise wird die in der Zeichnung rechts abgebildete Seite in Umfangsrichtung vorn am Fahrzeugreifen angeordnet, sodass die jeweils steilere Flanke der Erhebungen 4 bei Vorwärtsfahrt in den Schnee greifen kann. Gemäß der in Figur 3 gezeigten Ausführungsform wird die volle Profiltiefe 6 in Umfangsrichtung nur punktuell erreicht, wobei sich in Umfangsrichtung vorwärts und rückwärts direkt die Anstiege bzw. Abfälle der benachbarten Erhebungen 4 anschließen.

Figur 4 zeigt eine alternative Ausführungsform einer erfindungsgemäßen Rille in einer Schnittansicht ähnlich zu Figur 3. Im Gegensatz zu Figur 3 liegt zwischen den beiden gezeigten Erhebungen 4 in Umfangsrichtung ein ebener Abschnitt 10 des Rillengrundes 3 bei volle Profiltiefe 6 vor. Figur 4 wird weiterhin als Demonstrationsbeispiel genutzt, um einen maximalen Anstiegswinkel 11 sowie einen maximalen Abfallwinkel 12 der Erhebungen zu illustrieren. Die Winkel 11, 12 werden gegenüber der Längserstreckung der Profilrille 2 gemessen. Der maximale Anstiegswinkel 11 beträgt in dem gezeigten Ausführungsbeispiel etwa 70° und der maximale Abfallwinkel 12 beträgt etwa 55°. Die Erhebungen 4 folgen in ihrer Kontur einem stetigen, abgerundeten Verlauf, sodass Spannungsspitzen am Rillengrund 3 bestmöglich vermieden werden.

### Bezugszeichenliste

- 1: Laufstreifen
- 2: Profilrille
- 2': (weitere) Profilrille
- 3: Rillengrund
- 4: Erhebung
- 5: maximale Höhe
- 6: volle Profiltiefe
- 7: Basisfläche
- 8: Länge
- 9: Verschiebung
- 10: ebener Abschnitt
- 11: maximalerAnstiegswinkel
- 12: maximaler Abfallwinkel

## Patentansprüche

1. Laufstreifen (1) für einen Fahrzeugreifen, umfassend eine Profilrille (2) mit zwei Rillenflanken und einem sich zwischen den Rillenflanken erstreckenden Rillengrund (3), wobei der Rillengrund (3) gegenüber einer Basisfläche (7) um eine Rillentiefe zurückversetzt ist, wobei der Rillengrund (3) entlang einer Längserstreckung der Profilrille (2) mit die Rillentiefe verringernden Erhebungen (4) moduliert ist, wobei die Erhebungen (4) entlang der Längserstreckung jeweils asymmetrisch ausgebildet sind,
**dadurch gekennzeichnet,**
**dass** Pocket-Lamellen in dem Laufstreifen ausgebildet sind, wobei die Pocket-Lamellen lateral keine offenen Enden zu den Rillenflanken haben, und wobei die Pocket-Lamellen näher an einem jeweiligen Hochpunkt der Erhebungen angeordnet sind als an einem Punkt voller Profiltiefe.

2. Laufstreifen (1) gemäß Anspruch 1, **dadurch gekennzeichnet, dass** die Profilrille (2) eine Umfangsrille ist.

3. Laufstreifen (1) gemäß einem der Ansprüche 1 oder 2, **dadurch gekennzeichnet, dass** zwischen 10 und 100 Erhebungen (4) je Meter Längserstreckung der Profilrille (2) ausgebildet sind.

4. Laufstreifen (1) gemäß einem der Ansprüche 1 bis 3, **dadurch gekennzeichnet, dass** die Erhebungen (4) entlang der Längserstreckung jeweils zwischen 5 mm und 40 mm lang sind.

5. Laufstreifen (1) gemäß einem der Ansprüche 1 bis 4, **dadurch gekennzeichnet, dass** die Erhebungen (4) sich senkrecht zu der Basisfläche (7) jeweils über 20% bis 80% einer vollen Profiltiefe (6) erstrecken.

6. Laufstreifen (1) gemäß einem der Ansprüche 1 bis 5, **dadurch gekennzeichnet, dass** die Erhebungen (4) sich jeweils über eine volle Breite der Profilrille (2) zwischen den Rillenflanken erstrecken.

7. Laufstreifen (1) gemäß einem der Ansprüche 1 bis 6, **dadurch gekennzeichnet, dass** der Rillengrund (3) am höchsten Punkt der Erhebungen (4) jeweils entlang einer Breitenerstreckung der Profilrille (2) eine konstante Rillentiefe aufweist.

8. Laufstreifen (1) gemäß einem der Ansprüche 1 bis 7, **dadurch gekennzeichnet, dass** eine maximale Höhe (5) einer Erhebung (4) bei zwischen 20% und 45%, vorzugsweise bei zwischen 25% bis 35% der Länge (8) der Erhebung (4) erreicht ist.

9. Laufstreifen (1) gemäß einem der Ansprüche 1 bis 8, **dadurch gekennzeichnet, dass** die Erhebungen (4) entlang der Längserstreckung jeweils unter einem maximalen Anstiegswinkel (11) ansteigen und unter einem maximalen Abfallwinkel (12) abfallen, wobei der maximale Anstiegswinkel (11) größer ist als der maximale Abfallwinkel (12).

10. Laufstreifen (1) gemäß Anspruch 9, wobei der maximale Anstiegswinkel (11) zwischen 50° und 80° beträgt und der maximale Abfallwinkel (12) zwischen 30° und 60° beträgt.

11. Fahrzeugreifen mit einem Laufstreifen (1) gemäß einem der Ansprüche 1 bis 10.

## Claims

1. Tread strip (1) for a vehicle tyre, comprising a profile groove (2) with two groove flanks and a groove bottom (3) extending between the groove flanks, wherein the groove bottom (3) is set back in relation to a base surface (7) by a groove depth, wherein the groove bottom (3) is modulated along a longitudinal extent of the profile groove (2) with elevations (4) which reduce the groove depth, wherein the elevations (4) are each of asymmetrical configuration along the longitudinal extent,
**characterized in that**
pocket lamellae are configured in the tread strip, wherein the pocket lamellae have no open ends to the groove flanks laterally, and wherein the pocket lamellae are arranged closer to a respective high point of the elevations than to a point of full profile depth.

2. Tread strip (1) according to Claim 1, **characterized in that** the profile groove (2) is a circumferential groove.

3. Tread strip (1) according to either of Claims 1 or 2, **characterized in that** between 10 and 100 elevations (4) are configured per metre of longitudinal extent of the profile groove (2).

4. Tread strip (1) according to one of Claims 1 to 3, **characterized in that** the elevations (4) along the longitudinal extent are each between 5 mm and 40 mm long.

5. Tread strip (1) according to one of Claims 1 to 4, **characterized in that** the elevations (4) extend perpendicularly with respect to the base surface (7) in each case over 20% to 80% of a full profile depth (6).

6. Tread strip (1) according to one of Claims 1 to 5, **characterized in that** the elevations (4) each extend over a full width of the profile groove (2) between the groove flanks.

7. Tread strip (1) according to one of Claims 1 to 6, **characterized in that** the groove bottom (3) at the highest point of the elevations (4) has a constant groove depth in each case along a width extent of the profile groove (2).

8. Tread strip (1) according to one of Claims 1 to 7, **characterized in that** a maximum height (5) of an elevation (4) is reached at between 20% and 45%, preferably between 25% and 35% of the length (8) of the elevation (4).

9. Tread strip (1) according to one of Claims 1 to 8, **characterized in that** the elevations (4) along the longitudinal extent each rise at a maximum rise angle (11) and fall at a maximum fall angle (12), wherein the maximum rise angle (11) is greater than the maximum fall angle (12).

10. Tread strip (1) according to Claim 9, wherein the maximum rise angle (11) is between 50° and 80° and the maximum fall angle (12) is between 30° and 60°.

11. Vehicle tyre having a tread strip (1) according to one of Claims 1 to 10.

## Revendications

1. Bande de roulement (1) pour un pneu de véhicule, comprenant une rainure de profil (2) avec deux flancs de rainure et un fond de rainure (3) s'étendant entre les flancs de rainure, le fond de rainure (3) étant en retrait d'une profondeur de rainure par rapport à une surface de base (7), le fond de rainure (3) étant modulé le long d'une extension longitudinale de la rainure de profil (2) avec des reliefs (4) réduisant la profondeur de rainure, les reliefs (4) étant chacun réalisés de manière asymétrique le long de l'extension longitudinale,
**caractérisée**
**en ce que** des lamelles en poche sont réalisées dans la bande de roulement, les lamelles en poche n'ayant pas d'extrémités ouvertes latéralement vers les flancs de rainure, et les lamelles en poche étant agencées plus près d'un point haut respectif des reliefs que d'un point à pleine profondeur de profil.

2. Bande de roulement (1) selon la revendication 1, **caractérisée en ce que** la rainure de profil (2) est une rainure périphérique.

3. Bande de roulement (1) selon l'une quelconque des revendications 1 ou 2, **caractérisée en ce qu'**entre 10 et 100 reliefs (4) sont réalisés par mètre d'extension longitudinale de la rainure de profil (2).

4. Bande de roulement (1) selon l'une quelconque des revendications 1 à 3, **caractérisée en ce que** les reliefs (4) sont chacun d'entre 5 mm et 40 mm de longueur le long de l'extension longitudinale.

5. Bande de roulement (1) selon l'une quelconque des revendications 1 à 4, **caractérisée en ce que** les reliefs (4) s'étendent perpendiculairement à la surface de base (7) sur 20 % à 80 % d'une pleine profondeur de profil (6).

6. Bande de roulement (1) selon l'une quelconque des revendications 1 à 5, **caractérisée en ce que** les reliefs (4) s'étendent chacun sur une pleine largeur de la rainure de profil (2) entre les flancs de rainure.

7. Bande de roulement (1) selon l'une quelconque des revendications 1 à 6, **caractérisée en ce que** le fond de rainure (3) présente une profondeur de rainure constante au point le plus haut des reliefs (4) le long d'une extension en largeur de la rainure de profil (2).

8. Bande de roulement (1) selon l'une quelconque des revendications 1 à 7, **caractérisée en ce qu'**une hauteur maximale (5) d'un relief (4) est atteinte entre 20 % et 45 %, de préférence entre 25 % et 35 % de la longueur (8) du relief (4).

9. Bande de roulement (1) selon l'une quelconque des revendications 1 à 8, **caractérisée en ce que** les reliefs (4) s'élèvent le long de l'extension longitudinale selon un angle d'inclinaison maximal (11) et descendent selon un angle de déclivité maximal (12), l'angle d'inclinaison maximal (11) étant supérieur à l'angle de déclivité maximal (12).

10. Bande de roulement (1) selon la revendication 9, l'angle d'inclinaison maximal (11) étant compris entre 50° et 80° et l'angle de déclivité maximal (12) étant compris entre 30° et 60°.

11. Pneu de véhicule avec une bande de roulement (1) selon l'une quelconque des revendications 1 à 10.
